# EUROPÄISCHE PATENTANMELDUNG

(11) **EP 4 455 200 A2**
(43) Veröffentlichungstag der Anmeldung: **30.10.2024**
(21) Anmeldenummer: 24172600.9
(22) Anmeldetag: 26.04.2024
(51) Int. Cl.: C08J 11/08, C08J 11/10

(54) **VERFAHREN ZUM ENZYMATISCHEN RECYCLING VON POLYESTERN MIT KRISTALLINEN ANTEILEN**

(30) Priorität: 28.04.2023 DE 102023111010
(71) Anmelder: Universität Leipzig, Körperschaft des Öffentlichen Rechts, 04109 Leipzig (DE); Zimmermann, Wolfgang, 69469 Weinheim (DE)
(72) Erfinder: ZIMMERMANN, Wolfgang, 69469 Weinheim (DE); SONNENDECKER, Christian, 04109 Leipzig (DE); ZHAO, Ziyue, 04109 Leipzig (DE)
(74) Vertreter: Kailuweit & Uhlemann Patentanwälte Partnerschaft mbB

(57) **Zusammenfassung**

Die Erfindung betrifft ein Verfahren zum enzymatischen Recycling von Polyestern mit kristallinen Anteilen, insbesondere Polyethylenterephthalat, eine Amorphisierung und Oberflächenvergrößerung des Polyesters, was eine nachfolgende vollständige enzymatische Hydrolyse mit ermöglicht.

## Beschreibung

Die Erfindung betrifft ein Verfahren zum enzymatischen Recycling von Polyestern mit kristallinen Anteilen, insbesondere Polyethylenterephthalat, sowie eine Amorphisierung und Oberflächenvergrößerung des Polyesters mit kristallinen Anteilen.

Kunststoffabfälle stellen ein stetig wachsendes Umwelt- und Klimaproblem dar. Eine Möglichkeit zur Verringerung der mit der Anhäufung von Kunststoffen verbundenen ökologischen und wirtschaftlichen Auswirkungen ist das Recycling, bei dem Kunststoffmaterial mechanisch, thermomechanisch oder chemisch wiederaufbereitet wird, um neue Produkte herzustellen. Post-Consumer-Plastikabfälle summieren sich in Deutschland auf sechs Megatonnen pro Jahr, wovon nur ca. 30% recycelt werden. Weltweit belaufen sich die Plastikabfälle pro Jahr auf etwa 360 Megatonnen, wobei lediglich 9% recycelt werden.

Europaweit bestehen bereits Verarbeitungsmöglichkeiten für Polyethylenterephthalat (PET) in Höhe von ca. 2,6 Millionen Tonnen, wobei Deutschland über die meisten Kapazitäten verfügt. Der derzeitige Markt für PET weist eine Recyclingkapazität von über 2,2 Millionen Tonnen auf und führt zu insgesamt ca. 1,3 Millionen Tonnen Recyclingmaterial (EU-Recycling Magazin 03/2021, Seite 43, Servicebetrieb Bau & Stadtgrün, Stadt Schweinfurt).

Die bisherige Recycling-Technologie kann jedoch kaum hochreine Rezyklate zurückliefern, um aus Altplastik erneut lebensmittelgeeignete Verpackungen herstellen zu können. Gegenwärtig ist Recycling, insbesondere thermomechanisches Recycling, fast ausnahmslos ein Downcycling, d.h. die Polymergrundgerüste können nur für weniger anspruchsvolle Verwendungszwecke wieder herangezogen werden. Wirklich hochwertig, d. h. stofflich in neuwertiger Reinheit, wird durch chemisches Recycling lediglich 1% zurückgewonnen, maßgeblich aufgrund von sonst unwirtschaftlichen Energiekosten. Die restlichen 99% werden früher oder später verbrannt oder deponiert und führen dadurch zu Kohlenstoffdioxid-Emissionen oder Umweltbelastungen.

Gegenwärtig werden daher plastikabbauende Enzyme zum Kunststoffabbau untersucht, welche einige Vorteile gegenüber herkömmlichen Recyclingverfahren bieten, insbesondere Verwendung eines wässrigen Milieus, deutlich niedrigere Temperaturen (50 bis 70°C) gegenüber herkömmlichen Verfahren (180°C bis 1600°C), den Betrieb bei atmosphärischen Bedingungen, was die Anforderungen an industrielle Anlagen maßgeblich reduziert, sowie die biologische Herstellung und der biologische Abbau.

US 2022/0403422 A1 beschreibt ein Verfahren zur Depolymerisation eines Polymers, insbesondere Polyesters und/oder Polycarbonats, bevorzugt PET mit kristallinen Anteilen, durch enzymatische Hydrolyse in einer wässrigen Lösung.

Auch WO 2022/ 135 985 A1 beschreibt die enzymatische Hydrolyse von Polyestern, insbesondere bei einem pH-Wert im Bereich von 3 bis 6.

Eine der Voraussetzungen für den enzymatischen Abbau von Polyestern, insbesondere teilkristallinem PET, ist eine Vorbehandlung des Polyesters, wobei der Polyester in einen amorphen Zustand überführt wird, da Enzyme Polyester mit kristallinen Anteilen ohne Vorbehandlung nicht oder nur zu einem unbedeutenden Anteil abbauen können. Idealerweise erfolgt bei der Amorphisierung auch eine Oberflächenvergrößerung, da der enzymatische Abbau eine heterogene Katalyse darstellt und somit die Oberfläche des Polyesters die Bindungsstellen für das Enzym beschränkt.

Daher umfasst das enzymatische Recycling von Polyestern mit kristallinen Anteilen wie PET die Überführung in einen amorphen Zustand als Vorbehandlungsschritt, bevor die eigentliche enzymatische Hydrolyse und Isolierung der Monomere, d. h. bspw. die Wiedergewinnung von Terephthalat und Ethylenglykol im Fall von PET, stattfinden kann. Die Amorphisierung von Kunststoffen mit kristallinen Anteilen ist mithin eine zwingende Voraussetzung für deren vollständigen enzymatischen Abbau (Brizendine et al. 2022). Brizendine et al. offenbart eine Amorphisierung durch mechanische Zerkleinerung vor der enzymatischen Hydrolyse, wobei die mechanische Zerkleinerung keinen positiven Effekt auf die nachfolgende Hydrolyse hat (Brizendine et al. 2022).

WO 2022/ 243 547 A1 beschreibt die enzymatische Hydrolyse von recyceltem PET, insbesondere mittels Cutinasen, wobei als Vorbehandlung ein Zerkleinern, Waschen mit Ethanol, Trocknen, Kryomahlen und Sieben erfolgt.

WO 2017 198 786 A1 offenbart die Amorphisierung von PET und anschließend die enzymatische Hydrolyse, wobei die Amorphisierung thermisch, bei Temperaturen von über 245°C, erfolgt.

WO 2021/123301 A1 beschreibt ein enzymatisches Recyclingverfahren für Polymere. Als Verbesserung des enzymatischen Recyclingverfahrens wird eine Erhöhung der Kontaktflächen zwischen Plastikprodukt und Abbaureagenz beschrieben, insbesondere eine Erhöhung der Kontaktfläche der Polymere durch Faserbildung als Vorbehandlungsschritt vor dem enzymatischen Recycling.

WO 2021/123299 A1 beschreibt als Vorbehandlungsverfahren für ein enzymatisches Recyclingverfahren das Aufschäumen des Kunststoffprodukts, insbesondere PET, wobei der Schritt des Aufschäumens bei einer Temperatur durchgeführt wird, bei der sich das Kunststoffprodukt in einem teilweise oder vollständig geschmolzenen Zustand befindet. Bevorzugt erfolgt das Aufschäumen bei einer Temperatur von über 170°C und mit einem Schäumungsmittel, bevorzugt einem Gas, insbesondere Stickstoff, Kohlendioxid, Methan, Helium, Neon, Argon, Xenon, Wasserstoff oder einem Gemisch davon; oder Zitronensäure, Carbonat, Bicarbonat oder einer Mischung davon.

Tournier et al. beschreiben das Schmelzen von PET und anschließendes Mahlen in flüssigen Stickstoff, was aufgrund der Beschaffenheit von PET aufwendig ist (Tournier et al. 2020).

Nachteilig an den bekannten Vorbehandlungsverfahren ist vor allem der enorm hohe Wärme- und Energiebedarf, durch den das vollständige Recycling von Polyestern mit kristallinen Anteilen wie PET, d. h. die Rückgewinnung der Ausgangsstoffe Terephthalat und Ethylenglykol, unwirtschaftlich ist.

US 2022 / 0169823 A1 offenbart ein Verfahren zum Recycling von Polyester, wobei das Lösen von Polyester in einer Lösung umfassend Hexafluoro-2-propanol (HFIP) und ein Chlorkohlenwasserstoff, wie Dichlormethan (DCM), und/oder ein aromatischer Kohlenwasserstoff, wie Toluol oder Xylol, erfolgt. Anschließend erfolgt ein enzymatisches Recycling, wozu das gelöste Polyester mittels Verdampfung, Sprühtrocknung, Ausfällung und Kombinationen davon aufbereitet wird. Der Chlorkohlenwasserstoff, wie DCM, wird als NichtLösungsmittel beschrieben, welches zur Farbentfernung und Reinigung des Polyesters verwendet wird.

Aufgabe ist es daher, ein Verfahren zum enzymatischen Recycling von Kunststoffen bereitzustellen, welches eine alternative Vorbehandlung zur Amorphisierung von Polyestern mit kristallinen Anteilen aufweist.

Erfindungsgemäß wird die Aufgabe durch das Verfahren gemäß dem unabhängigen Anspruch gelöst. Vorteilhafte Ausgestaltungen der Erfindung sind in den abhängigen Ansprüchen angegeben.

Die Erfindung betrifft ein Verfahren zur Amorphisierung und Oberflächenvergrößerung von Polyestern mit kristallinen Anteilen, insbesondere Polyethylenterephthalat (PET), als Vorbehandlungsmethode für ein enzymbasiertes Recyclingverfahren.

Ein erster Aspekt der Erfindung betrifft ein Verfahren zum enzymatischen Recycling von Polyestern mit kristallinen Anteilen umfassend die folgenden Schritte:
a) Lösen des Polyesters mit kristallinen Anteilen in einem Lösungsmittel,
b) Präzipitation des gelösten Polyesters aus der Polyester-Lösung durch Ausfällen der Polyester-Lösung mit einem Anti-Lösungsmittel,
   wobei das Anti-Lösungsmittel Wasser oder ein Alkohol ist,
c) Abtrennung des Lösungsmittels und Anti-Lösungsmittels von dem präzipitierten Polyester, und
d) enzymatische Hydrolyse des präzipitierten Polyesters.

Erfindungsgemäß erfolgt in Schritt a) und b) eine Amorphisierung und Oberflächenvergrößerung des Polyesters mit kristallinen Anteilen. Vorteilhaft wird durch die Amorphisierung in dem erfindungsgemäßen Verfahren, insbesondere Schritt a) und b), die Morphologie des Ausgangsmaterials, des Polyesters, von teilkristallin zu amorph geändert.

Vorteilhaft wird durch das erfindungsgemäße Verfahren, die Oberfläche des Polyesters besonders gut für die spätere enzymatische Hydrolyse vorbereitet, insbesondere hinsichtlich der Porosität und Vergrößerung der Angriffsfläche. Weiterhin vorteilhaft ermögicht das erfindungsgemäße Verfahren ein enzymatisches Recycling von bisher nicht oder nur unwirtschaftlich recyclebaren Polyestern, um die Ausgangsstoffe für Polyester dauerhaft in einem geschlossenen Kreislauf zu halten.

In Ausführungsformen erfolgt das Verfahren mit der Reihenfolge der Schritte a), b), c) und d). In weiteren Ausführungsformen erfolgt das Verfahren mit der Reihenfolge der Schritte a), b), c) und d), wobei Schritt b) und c) simultan erfolgen.

Unter dem Begriff "mit kristallinen Anteilen" wird eine partielle Ordnung der Molekülketten im Polymer verstanden, welche durch amorphe Bereiche getrennt sind.

In Ausführungsformen weist der Polyester eine Kristallinität von mindestens 1%, insbesondere im Bereich von 1% bis 60%, bevorzugt im Bereich von 10% bis 50%, auf. Zweckmäßig wird die Kristallinität mittels Dichtemessung, dynamischer Differenzkalorimetrie (DSC), Röntgenbeugung, Infrarot (IR)-Spektroskopie, Raman-Spektroskopie oder Kernresonanzspektroskopie (NMR), bevorzugt mittels dynamischer Differenzkalorimetrie (DSC), bestimmt. Vorteilhafterweise ermöglicht das erfindungsgemäße Verfahren eine schnelle, kostengünstige und energiesparende Vorbehandlung, insbesondere eine Amorphisierung und Oberflächenvergrößerung, von Polyester unabhängig von seinem kristallinen Umfang.

Unter dem Begriff "Polyester" wird ein Polymer mit mindestens einer Estergruppe in der Hauptkette verstanden.

In Ausführungsformen ist der Polyester mit kristallinen Anteilen aus Polyethylenterephthalat (PET), Polytrimethylenterephthalat (PTT), Polybutylenterephthalat (PBT), Polyethylenisosorbidterephthalat (PEIT), Polymilchsäure (PLA), Polyhydroxyalkanoat (PHA), Polybutylensuccinat (PBS), Polybutylensuccinatadipat (PBSA), Polybutylenadipat-Terephthalat (PBAT), Polyethylenfuranoat (PEF), Polycaprolacton (PCL), Poly(ethylenadipat) (PEA), Polybutylensuccinat-Terephthalat (PBST), Polyethylensuccinat (PES), Poly(butylensuccinat/terephthalat/isophthalat)-co-(lactat) (PBSTIL) und Mischungen dieser ausgewählt.

In bevorzugten Ausführungsformen ist der Polyester PET oder Polymilchsäure, besonders bevorzugt PET. In Ausführungsformen umfasst der Polyester auch Polyester-Kunststoff-Mischungen, insbesondere PET-Kunststoff-Mischungen und Abfälle enthaltend Polyester, insbesondere PET. In Ausführungsformen umfassen Polyester-Kunststoff-Mischungen, insbesondere PET-Kunststoff-Mischungen und Abfälle enthaltend Polyester, amorphe Polyester und Polyester mit kristallinen Anteilen, bevorzugt amorphes PET und PET mit kristallinen Anteilen.

In Ausführungsformen ist der Polyester mit kristallinen Anteilen eine Textilfaser, eine Folie und/oder eine Verpackung.

Dem Fachmann sind Lösungsmittel zum Lösen von Polyestern bekannt, beispielsweise wird das Lösen von Polyestern, insbesondere PET, von Triantafyllou et al. (2002) oder Pulido et al. (2019) offenbart.

In Ausführungsformen ist das Lösungsmittel ein halogeniertes organisches Lösungsmittel. Unter dem Begriff "halogeniert" wird eine organische Verbindung verstanden, in der mindestens ein Wasserstoff durch ein Halogen, insbesondere Fluor, Chlor, Brom oder Jod, ersetzt ist. In Ausführungsformen ist das Lösungsmittel ein Protonendonor.

In Ausführungsformen ist das Lösungsmittel aus der Gruppe umfassend Hexafluoro-2-propanol (HFIP), Cholin-haltigen ionischen Flüssigkeiten, o-Chlorophenol, o-Cresol, Dichlormethan, Trifluoressigsäure (TFA) oder Mischungen dieser ausgewählt. In bevorzugten Ausführungsformen ist das Lösungsmittel HFIP oder TFA, besonders bevorzugt HFIP. Vorteilhafterweise können durch den Einsatz von HFIP die Polymerketten bei Raumtemperatur gelöst werden, wodurch der Energiebedarf deutlich reduziert wird.

In Ausführungsformen erfolgt das Lösen des Polyesters mit kristallinen Anteilen in Schritt a) mit einer Konzentration im Bereich von 0,05 g/ml bis 0,5 g/ml Polyester im Lösungsmittel. Vorteilhaft wird in diesem Konzentrationsbereich vornehmlich makroskopisches Präzipitat erhalten, was einfach vom Anti-Lösungsmittel abgetrennt werden kann.

In Ausführungsformen erfolgt Schritt a) bei einer Temperatur im Bereich von -80°C bis +100°C, bevorzugt 0°C bis 70°C.

In Ausführungsformen erfolgt Schritt a) für eine Dauer im Bereich von 5 s bis 10 h. Zweckmäßig ist die Dauer des Lösevorgangs in Schritt a) abhängig von der Schichtdicke des Polyesters mit kristallinen Anteilen. In Ausführungsformen erfolgt Schritt a) für eine Dauer im Bereich von 5 s bis 5 min bei Textilfasern. In Ausführungsformen erfolgt Schritt a) für eine Dauer im Bereich von 2 h bis 10 h bei Filmmaterialien, insbesondere Folien und Verpackungen, mit einer Schichtdicke von maximal 250 µm.

In Ausführungsformen erfolgt die Präzipitation des gelösten Polyesters in Schritt b) und Abtrennung des Lösungsmittels von dem präzipitierten Polyester in Schritt c) durch Ausfällen der Polyester-Lösung mit einem Anti-Lösungsmittel und Abtrennung des Lösungsmittels und Anti-Lösungsmittels von dem präzipitierten Polyester mittels Destillation. Vorteilhaft können in Schritt c) sowohl das Lösungsmittel als auch das Anti-Lösungsmittel durch die Destillation zurückgewonnen werden. In Ausführungsformen erfolgt die Abtrennung des Lösungsmittels und Anti-Lösungsmittels von dem präzipitierten Polyester mittels Filtration, Sedimentation, Dekantieren oder Zentrifugieren.

Unter dem Begriff "Anti-Lösungsmittel" wird eine Flüssigkeit, verstanden, in welchem der Polyester mit kristallinen Anteilen unlöslich ist oder eine geringe Löslichkeit aufweist.

Vorteilhaft wird durch die Präzipitation des gelösten Polyesters in Schritt b), insbesondere durch das Ausfällen der Polyester-Lösung mit einem Anti-Lösungsmittel, eine Oberflächenvergrößerung um einen Faktor von bis zu 6.500 erreicht. Das erfindungsgemäße Präzipitationsverfahren unter Einsatz eines Lösungs- und Anti-Lösungsmittels zielt in Ausführungsformen auf die Herstellung einer mesoporösen Oberfläche ab, an der das Enzym besonders gut angreifen kann, um die enzymatische Hydrolyse in Schritt d) zu beschleunigen. In Ausführungsformen erfolgt eine schrittweise, insbesondere eine tröpfchenweise, Zugabe der Polyester-Lösung zum Anti-Lösungsmittel. Aufgrund der Oberflächenvergrößerung können erfindungsgemäß vorbehandelte Polyester innerhalb von weniger als 3h vollständig enzymatisch abgebaut werden, d.h. in ihre Ausgangsstoffe zerlegt werden.

In Ausführungsformen ist das Anti-Lösungsmittel ein Protonendonor, bevorzugt Wasser (H₂O) oder ein Alkohol, besonders bevorzugt ein nichthalogenierter Alkohol. In Ausführungsformen ist das Anti-Lösungsmittel aus Wasser, Isopropanol, Ethanol oder Ethylenglykol ausgewählt. Bevorzugt ist das Anti-Lösungsmittel Wasser oder Isopropanol. Besonders bevorzugt ist das Anti-Lösungsmittel Isopropanol. Vorteilhaft wird durch die Verwendung von Isopropanol als Anti-Lösungsmittel eine deutliche Erhöhung der spezifischen Oberfläche des Polyesters erreicht.

In Ausführungsformen erfolgt Schritt b) unter Verwendung eines Anti-Lösungsmittels bei einer Temperatur im Bereich von -20°C bis 20°C. Der Polyester kann aus der entstehenden Lösung besonders vorteilhaft präzipitiert und enzymatisch hydrolysiert werden.

In bevorzugten Ausführungsformen erfolgt Schritt b) unter Verwendung einer Kombination von HFIP oder TFA als Lösungsmittel, besonders bevorzugt HFIP, und Isopropanol oder Ethanol als Anti-Lösungsmittel, besonders bevorzugt Isopropanol. Vorteilhaft kann durch diese Kombination eine besonders hohe Oberflächenvergrößerung bis zum Faktor von 6.500 erreicht werden.

In Ausführungsformen liegt das Verhältnis Lösungs- und Anti-Lösungsmittel im Bereich von 1:1 bis 1:100. Zweckmäßig erfolgt die Variation des Verhältnisses von Lösungs- und Anti-Lösungsmittel in Abhängigkeit der Konzentration des Polyesters im Lösungsmittel.

In Ausführungsformen können niedrige Konzentrationen des Polyesters im Lösungsmittel mit einem nahezu äquimolaren Verhältnis oder nur geringem Überschuss des Anti-Lösungsmittels im Vergleich zum Lösungsmittel präzipitiert werden.

In Ausführungsformen liegt das Verhältnis Lösungs- und Anti-Lösungsmittel im Bereich von 1:1 bis 1:2 bei einer Konzentration an Polyester im Bereich von 0,05 bis 0,5 g/ml Polyester in Lösungsmittel.

In Ausführungsformen kann ein weiter Konzentrationsbereich, insbesondere niedrige bis hohe Konzentrationen des Polyesters im Lösungsmittel mit einem Überschuss des Anti-Lösungsmittel im Vergleich zum Lösungsmittel präzipitiert werden. Vorteilhaft ist bei der Verwendung von geringeren Mengen von Anti-Lösungsmittel die Rückgewinnung des Lösungsmittels, insbesondere durch Destillation oder Extraktion, vereinfacht.

In Ausführungsformen liegt das Verhältnis Lösungs- und Anti-Lösungsmittel im Bereich von 1:2 bis 1:100, bevorzugt im Bereich von 1:10 bis 1:50, bei einer Konzentration an Polyester im Bereich von 0,05 bis 0,2 g/ml Polyester in Lösungsmittel.

Durch das Verhältnis Lösungs- und Anti-Lösungsmittel kann vorteilhafterweise die Abbaugeschwindigkeit und -rate des vorbehandelten Polyesters beeinflusst werden.

Besonders vorteilhaft entstehen durch die Kombination des Verhältnisses an Lösungs- und Anti-Lösungsmittel mit der Polyesterkonzentration mesoporöse Oberflächen und dadurch eine sehr starke Oberflächenvergrößerung, die sich vorteilhaft auf die Abbaugeschwindigkeit und -rate auswirkt.

In Ausführungsformen umfasst das erfindungsgemäße Verfahren weiterhin eine Zerkleinerung des Polyesters, bevorzugt vor Schritt a), und/oder eine Trocknung des präzipitierten Polyesters, bevorzugt nach Schritt c). Zweckmäßig werden durch eine Trocknung des präzipitierten Polyesters nach Schritt c) Restmengen an Lösungsmittel entfernt, welche die enzymatische Hydrolyse stören könnten.

In Ausführungsformen erfolgt die Zerkleinerung des Polyesters, bevorzugt vor Schritt a), durch Schneiden oder Mahlen.

In Ausführungsformen wird durch die enzymatische Hydrolyse des präzipitierten Polyesters in Schritt d) ein Hydrolysat, umfassend Terephthalat und Ethylenglykol, erhalten.

In Ausführungsformen erfolgt nach der enzymatischen Hydrolyse eine Auftrennung und/oder Reinigung der Produkte, insbesondere durch Ausfällung und Umkristallisation von Terephthalsäure und/oder Destillation von Ethylenglykol. In Ausführungsformen wird Terephthalat in die Säureform überführt, typischerweise durch Zugabe einer stärkeren Säure, wodurch Terephthalsäure ausfällt, und über eine Umkristallisation in hoher Reinheit gewonnen wird. In weiteren Ausführungsformen wird Ethylenglykol durch Verdampfung des Lösungsmittels erhalten und/oder in verdünnter Form für andere technische Zwecke verwendet.

Vorteilhafterweise können durch das erfindungsgemäße Verfahren die Ausgangsstoffe der erfindungsgemäß behandelten Polyester mit einem hohen Reinheitsgrad wiedergewonnen und zur Herstellung neuer Polyester verwendet werden. Das Verfahren trägt damit wesentich zur Reduktion fossiler Ressourcen und Kohlenstoffdioxid (CO₂)-Emissionen bei und wirkt der Umweltverschmutzung entgegen, in dem bisher nicht oder nur unwirtschaftlich recyclebare Polyester enzymatisch bei niedrigen Energiekosten wiedergewonnen werden.

In Ausführungsformen erfolgt die enzymatische Hydrolyse in Schritt d) durch Kontaktierung des präzipitierten Polyesters mit einer Polyesterhydrolase. Zweckmäßig wird die Polyesterhydrolase von mindestens einem Mikroorganismus exprimiert.

In Ausführungsformen erfolgt die enzymatische Hydrolyse in Schritt d) durch Kontaktierung mit mindestens einem Mikroorganismus, welcher die Polyesterhydrolase exprimiert und ausscheidet.

In Ausführungsformen ist der Mikroorganismus eine Bakterienzelle oder eine eukaryotische Zelle, insbesondere ein Pilz, eine pflanzliche oder eine tierische Zelle.

In Ausführungsformen ist die Bakterienzelle aus Thermobifida ausgewählt, bevorzugt aus *Thermobifida fusca.*

In Ausführungsformen wird das Enzym über rekombinante Proteinexpression erhalten, bevorzugt durch Expression in *Escherichia coli, Pichia* species, *Bacillus* species oder *Trichoderma* species.

Die Methoden zur Kultivierung von Mikroorganismen sind dem Fachmann bekannt, wobei die Mikroorganismen kontinuierlich oder diskontinuierlich, insbesondere im Batch-Verfahren (Satzkultivierung) oder im Fed-batch (Zulaufverfahren) oder Repeated fed-batch Verfahren (repetitives Zulaufverfahren), zum Zwecke der Anzucht oder der enzymatischen Hydrolyse kultiviert werden.

In Ausführungsformen ist die Polyesterhydrolase aus Esterasen, Cutinasen, Proteasen, Lipasen und Carboxylesterasen ausgewählt. Bevorzugt ist die Polyesterhydrolase eine Cutinase oder eine Esterase, bevorzugt eine Carboxylesterase. Beispielsweise werden PHL-7 und LC-Cutinase eingesetzt (Sulaiman et al. 2012, Sonnendecker et al. 2022).

In Ausführungsformen erfolgt die Anzucht in einem Schüttelkolben oder im Fermenter. Bevorzugt erfolgt die Kultivierung unter physiologischen Bedingungen bei einer Temperatur im Bereich von 10 °C bis 50 °C, bevorzugt im Bereich von 20 °C bis 40 °C, besonders bevorzugt im Bereich von 23 °C und 37 °C, wobei der pH-Wert der wässrigen Komponente bevorzugt im Bereich von 5,8 bis 8,5, besonders bevorzugt im Bereich von 6,5 bis 8,0, liegt.

In Ausführungsformen erfolgt die enzymatische Hydrolyse bei einer Temperatur im Bereich von 5°C und 90°C, bevorzugt im Bereich von 40°C bis 70°C.

Für die Realisierung der Erfindung ist es auch zweckmäßig, die vorbeschriebenen erfindungsgemäßen Ausgestaltungen, Ausführungsformen und Merkmale der Ansprüche miteinander zu kombinieren.

### Ausführungsbeispiele

Nachfolgend soll die Erfindung anhand eines Ausführungsbeispiels eingehender erläutert werden. Das Ausführungsbeispiel soll dabei die Erfindung beschreiben, ohne diese zu beschränken.

Anhand von Zeichnungen wird die Erfindung näher erläutert.
- **Fig. 1**: zeigt unterschiedliche Oberflächenstrukturen von PET-Präzipitaten aufgenommen mittels Elektronenmikroskop nach den Schritten a) bis c) des erfindungsgemäßen Verfahrens, d.h. nach der Amorphisierung, wobei als Lösungsmittel HFIP und als Anti-Lösungsmittel Wasser (AQ), Isopropanol (IPA), Ethanol (ETH), Aceton (ACE), Acetonitril (ACN) und Ethylacetat (EA) verwendet wurden.
- **Fig. 2**: zeigt eine A) Stickstoff-Adsorptionsisotherme und B) Porengrößenverteilung eines PET-Präzipitats nach den Schritten a) bis c) des erfindungsgemäßen Verfahrens wobei als Lösungsmittel HFIP und als Anti-Lösungsmittel Isopropanol verwendet wurde.
- **Fig. 3**: zeigt die spezifische Aktivität der enzymatischen Hydrolyse von PET-Präzipitat nach den Schritten a) bis c) des erfindungsgemäßen Verfahrens wobei als Lösungsmittel HFIP und als Anti-Lösungsmittel Wasser (AQ), Isopropanol (IPA), Ethanol (ETH), Aceton (ACE), Acetonitril (ACN) und Ethylacetat (EA) verwendet wurde.
- **Fig. 4**: zeigt den Einfluss der Enzymkonzentration (0,5; 1,0; 2,0; 4,0; 6,0 und 15,9 µM) auf den PET-Abbau von biaxial-gestreckten PET nach Präzipitation in IPA.

### Erfindungsgemäßes Verfahren

Ein PET-Material mit kristallinen Anteilen wird in dem Lösungsmittel 1,1,1,3,3,3-Hexafluor-2-propanol (HFIP) in Lösung gebracht. Das PET wird im Verhältnis von 10 % (w/w) PET in HFIP gelöst. Der Lösevorgang erfolgt bei Raumtemperatur (20°C). Je nach Material (PET- Textilfaser, Folie oder Verpackung) kann der Lösungsvorgang Sekunden bis Stunden betragen. Anschließend wird das PET aus der Lösung durch ein Präzipitationsverfahren gewonnen Dies erfolgt durch Ausfällung in einem Anti-Lösungsmittel. Als Anti-Lösungsmittel wird insbesondere Isopropanol oder Ethanol verwendet. Anschließend wird das Präzipitat von der Lösung entfernt durch Filtration, Sedimentation, Dekantieren oder Zentrifugieren. Das präzipitierte PET wird anschließend getrocknet, ggf. zerkleinert und das Lösungsmittel HFIP wird durch Destillation zurückgewonnen. Die Destillation des HFIP erfolgt bei ca. 55 bis 60°C. Anschließend kann das erhaltene PET als Substrat für die Enzymreaktion eingesetzt werden.

### Einfluss der PET-Konzentration auf die Präzipitation mit einem Anti-Lösungsmittel

Verschiedene Mengen PET (Goodfellow GmbH) wurden in 10 ml HFIP (Lösungsmittel) gelöst und tropfenweise in 500 ml Wasser (Anti-Lösungsmittel) bei 4°C zugeführt. Die Präzipitat- und Nanopartikelfraktion wurden anschließend getrocknet und das Gewicht gravimetrisch bestimmt. Je höher die PET-Konzentration in HFIP, desto weniger Nanopartikel werden geformt (siehe **Tab. 1).** Bei 120 g/L PET in HFIP wird ausschließlich ein Präzipitat bestehend aus einem makroporösen Material erhalten.

**Tab. 1 Einfluss der PET-Konzentration bei der Präzipitation des HFIP-gelösten PET in Wasser.**

| **Versuch 1** | **Menge PET (g)** | **Konzentration** | **Präzipitat (g)** | **Nanopartikel (g)** |
|---|---|---|---|---|
| | 0,2 | 0,02 g/ml | 0,160 | 0,014 |
| | 0,5 | 0,05 g/ml | 0,445 | 0,009 |
| | 1,2 | 0,12 g/ml | 1,112 | 0 |

| **Versuch 2** | **Menge PET (g)** | **Konzentration** | **Präzipitat (g)** | **Nanopartikel (g)** |
|---|---|---|---|---|
| | 0,2 | 0,02 g/ml | 0,165 | 0,012 |
| | 0,5 | 0,05 g/ml | 0,463 | 0,013 |
| | 1,2 | 0,12 g/ml | 1,089 | 0 |

Mit kommerziellen PET-Flaschen (semikristallin) und einer PET-Konzentration von 120 g/L wird ausschließlich ein Präzipitat bestehend aus einem makroporösen Material erhalten.

**Tab. 2 Präzipitation von PET aus PET-Getränkeflaschen gelöst in HFIP.**

| PET-Material | **Menge PET (g)** | **Konzentration** | **Präzipitat (g)** | **Nanopartikel (g)** |
|---|---|---|---|---|
| Mehrweggetränkeflasche eines ersten Anbieters | 1,2 | 0,12 g/ml | 1,09 | 0 |
| Mehrweggetränkeflasche eines zweiten Anbieters | 1,2 | 0,12 g/ml | 1,03 | 0 |

### Enzymatische Hydrolyse von amorphisierten PET-Präzipitaten

Die enzymatische Hydrolyse von amorphisierten PET-Präzipitaten wird in Tab. 3 gezeigt. Die Präzipitation erfolgte im Anti-Lösungsmittel IPA. Dazu wurden ca. 45 mg PET-Präzipitat in 1,8 ml 1 M Phosphatpuffer, pH 8 auf 70°C erwärmt. Die Reaktion erfolgte durch Zugabe von 25 µg der Polyesterhydrolase (Sulaiman et al. 2012). Nach Inkubation für 22 h wurde die nicht-lösliche Phase durch Filtration abgenommen und der Gewichtsverlust nach Trocknung gravimetrisch bestimmt. Der Gewichtsverlust stellt hierbei den Anteil abgebauten PET-Präzipitates dar.

**Tab. 3 Gewichtsverluste von präzipitiertem PET aus Getränkeflaschen nach enzymatischer Hydrolyse.**

| **Präzipitat** | | **Initial (mg)** | **Rest (mg)** | **Abbau (mg)** | **Gewichtsverlus t** | **Mittelwer t** |
|---|---|---|---|---|---|---|
| Mehrweggetränkeflasche eines ersten Anbieters | 1 | 45,1 | 5,4 | 39,7 | 88,0% | |
| | 2 | 47,2 | 3,2 | 44,0 | 93,2% | |
| | 3 | 46,3 | 8,6 | 37,7 | 81,4% | 87,6% |
| Mehrweggetränkeflasche eines zweiten Anbieters | 1 | 47,1 | 9,0 | 38,1 | 80,9% | |
| | 2 | 44,6 | 8,3 | 36,3 | 81,4% | |
| | 3 | 45,2 | 6,0 | 39,2 | 86,7% | 83,0% |
| Mehrweggetränkeflasche eines dritten Anbieters | 1 | 46,8 | 8,7 | 38,1 | 81,4% | |
| | 2 | 43,6 | 5,6 | 38,0 | 87,2% | |
| | 3 | 44,8 | 4,9 | 39,9 | 89,1% | 85,9% |

### Einfluss des Anti-Lösungsmittels auf Struktur, Kristallinität und Präzipitationsverhalten

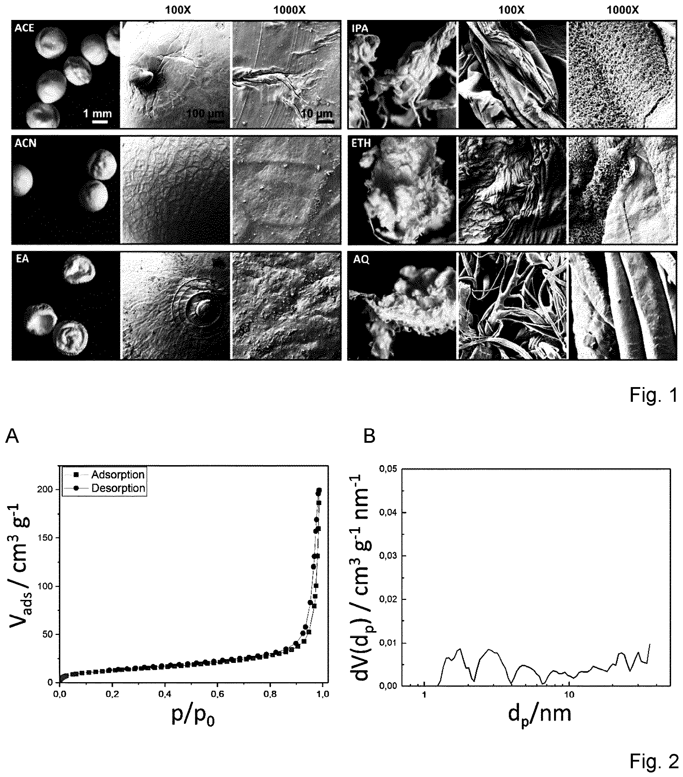

Der Einfluss des Anti-Lösungsmittels wurde anhand von Wasser (AQ), Isopropanol (IPA), Ethanol (ETH), Aceton (ACE), Acetonitril (ACN) und Ethylacetat (EA) als Anti-Lösungsmittel getestet. Dazu wurde ein biaxial-gestreckter PET-Film (Goodfellow, Ltd. mit hoher Kristallinität) als Ausgangsmaterial für den Lösungsprozess mit HFIP verwendet. Wie in **Fig. 1** zu sehen, beeinflusst die Art des Anti-Lösungsmittel das Präzipitationsverhalten und somit die Morphologie des Präzipitats. Protonendonoren wie Alkohole (IPA, ETH, AQ) führen Material mit makroporösen Oberflächen, Protonenakzeptoren hingegen führen zu kompakten, kugelförmigen Körpern mit geschlossener Oberfläche.

Anschließend wurde die spezifische Oberfläche der erhaltenen Präzipitate mittels Stickstoffadsorption untersucht (siehe **Tab. 4,** **Fig. 2**). Die Messung erfolgte nach der BET-Methode. Die berechnete Oberfläche eines PET-Films (Schichtdicke 0,25 mm) beträgt ca. 0,007 m²/g (bei Annahme vollständig planarer Ebenen). Durch die Vorbehandlung konnte mit allen Anti-Lösungsmitteln eine deutliche Erhöhung der spezifischen Oberfläche erreicht werden. Bei der Verwendung von Isopropanol wurde sogar eine Oberflächenvergrößerung um den Faktor -6500 erzielt. Die PET-Präzipitate wurden aufgrund der hohen spezifischen Oberfläche als makroporöses Material identifiziert. Die Porendurchmesser waren hierbei inhomogen und nicht definiert, was auf eine inhomogene Struktur hindeutet **(****Fig. 2B****).**

**Tab. 4 Stickstoffadsorptionsmessung zur Bestimmung der spezifischen Oberfläche der erhaltenen PET-Präzipitate bei der Verwendung von Wasser (AQ), Isopropanol (IPA), Ethanol (ETH), Aceton (ACE), Acetonitril (ACN) und Ethylacetat (EA) als Anti-Lösungsmittel.**

| Anti-Lösungsmittel | Versuch | BET (m²/g) |
|---|---|---|
| Wasser | | 5 |
| Isopropanol | 1 | 45 |
| | 2 | 43 |
| Ethanol | 1 | 7 |
| | 2 | 19 |
| Aceton | | 4 |
| Acetonitril | | 6 |
| Ethylacetat | | 4 |

Der Kristallinitätsgrad der Proben wurde mit verschiedenen Methoden (Dynamische Differenzkalorimetrie (DSC)-Messung, Ramanspekrospkopie, ATR-FTIR(I₁₃₄₂)-Spektroskopie bzw. ATR-FTIR(A₁₃₄₂)-Spektroskopie) untersucht. Mit Raman- und ATR-FTIR-Spektroskopie wurde die Oberflächenkristallinität untersucht. Der mit DSC bestimmte Kristallinitätsgrad eines amorphen PET-Films (A-PET-Film) wurde zur Kalibrierung der Raman- und ATR-FTIR Methode verwendet. Der Kristallinitätsgrad des PET-Ausgangsmaterials ist in allen getesteten Präzipitaten reduziert, insbesondere bei der Verwendung von Ethanol, Isopropanol und Wasser als Anti-Lösungsmittel.

**Tab. 5 Bestimmung des Kristallinitätsgrades von PET-Präzipitaten bei der Verwendung von Wasser (AQ), Isopropanol (IPA), Ethanol (ETH), Aceton (ACE), Acetonitril (ACN) und Ethylacetat (EA) als Anti-Lösungsmittel.**

| | PET-ACE | PET-ACN | PET-EA | PET-ETH | PET-IPA | PET-AQ | A-PET Film | PET-Film (Ausgangs -material) |
|---|---|---|---|---|---|---|---|---|
| DSC | 21,8 | 27,7 | 23,4 | 13,6 | 11,8 | 11,3 | 6,2 | 29,7 |
| Raman | 24,2 | 20,2 | 25,3 | 7,6 | 11,0 | 14,4 | 6,2 | 33,8 |
| ATR-FTIR(I₁₃₄₂) | 23,9 | 23,2 | 26,9 | 10,5 | 10,1 | 15,7 | 6,2 | 46,1 |
| ATR-FTIR(A₁₃₄₂) | 26,9 | 25,3 | 29,1 | 9,8 | 9,2 | 14,1 | 6,2 | 58,5 |

### Einfluss der Enzymkonzentration auf die enzymatische Hydrolyse der PET-Präzipitate

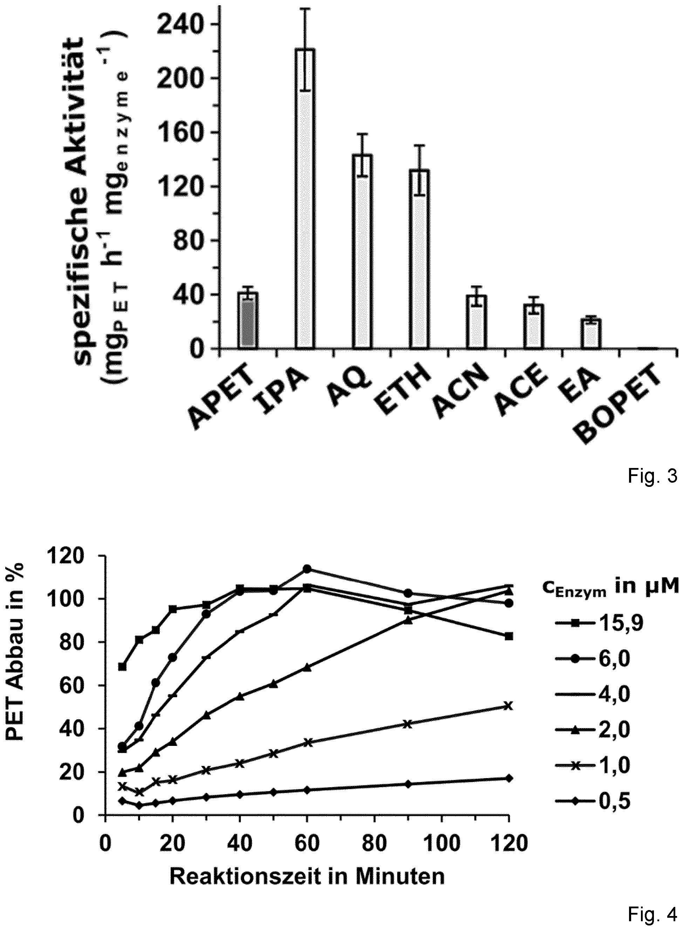

**Fig. 3** zeigt einen Vergleich der enzymatischen Hydrolyse verschiedener Präzipitate und Verwendung einer Enzymkonzentration von 1 µM. Das mit Isopropanol als ALM erhaltene PET-Präzipitat zeigte die höchste Abbaurate. Dies lässt sich durch die große Oberfläche und geringe Kristallinität nach Lösung des PET mit HFIP und anschließender Präzipitation mit Isopropanol erklären. Die mittels Ethanols bzw. Wasser erhaltenen PET-Präzipitate zeigen ebenfalls eine hohe Abbaurate.

**Fig. 4** zeigt behandeltes BO-PET (biaxial-gestrecktes PET) nach Präzipitation in IPA und den Einfluss der Enzymkonzentration auf den PET-Abbau PET-Präzipitate (35 mg) wurden in 1,8 ml 1 M Phosphat-NAOH-Puffer (pH 8) mit verschiedenen Enzymkonzentrationen (0,5, bis 15,9 µM) der Polyesterhydrolase PHL7 (Sonnendecker et al. 2022) für zwei Stunden bei 70°C inkubiert und das freigesetzte Terephthalat im Überstand UV-spektroskopisch bestimmt.

### Zitierte Nichtpatentliteratur:

Brizendine RK, Erickson, Haugen SJ, Ramirez KJ, Mlscall J, Salvachüa D, Pickford AR, Sobkowicz MJ, McGeehan JE, Beckham GT (2022) Particle Size Reduction of Poly(ethylene terephthalate) Increases the Rate of Enzymatic Depolymerization But Does Not Increase the Overall Conversion Extent. ACS Sustainable Chem. Eng. 10, 9131-9140.
Pulido BA, Habboub OS, Aristizabal SL, Szekely G, Nunes SP (2019) Recycled Poly(ethylene terephthalate) for High Temperature Solvent Resistant Membranes. CS Appl. Polym. Mater. 1, 9, 2379-2387.
Sonnendecker C, Oeser J, Richter PK, Hille P, Zhao Z, Fischer C, Lippold H, Bläzquez-Sänchez P, Engelberger F, Ramírez-Sarmiento CA, Oeser T, Lihanova Y, Frank R, Jahnke H-G, Billig S, Abel B, Sträter N, Matysik J, Zimmermann W (2022) Low Carbon Footprint Recycling of Post-Consumer PET Plastic with a Metagenomic Polyester Hydrolase. ChemSusChem 15, e202101062.
Sulaiman S, Yamato S, Kanaya E, Kim J-J, Koga Y, Takano K, Kanaya S (2012) Isolation of a Novel Cutinase Homolog with Polyethylene Terephthalate-Degrading Activity from Leaf-Branch Compost by Using a Metagenomic Approach. Applied and Environmental Microbiology 78 (5).
Tournier V, Topham CM, Gilles A, David B, Folgoas C, Moya-Leclair E, Kamionka E, Desrousseaux M-L, Texier H, Gavalda S, Cot M, Guémard E, Dalibey M, Nomme J, Cioci G, Barbe S, Chateau M, André I, Duquesne S, Marty A (2020)An engineered PET depolymerase to break down and recycle plastic bottles. Nature 580, 216-219.
Triantafyllou VI, Karamani AG, Akrida-Demertzi K, Demertzis PG (2002) Studies on the usability of recycled PET for food packaging applications. Eur. Food Res. Technol. 215, 243-248. DOI 10.1007 /s00217 -002-0559-1.

## Patentansprüche

1. Verfahren zum enzymatischen Recycling von Polyestern mit kristallinen Anteilen umfassend die folgenden Schritte:
a) Lösen des Polyesters mit kristallinen Anteilen in einem Lösungsmittel,
b) Präzipitation des gelösten Polyesters aus der Polyester-Lösung durch Ausfällen der Polyester-Lösung mit einem Anti-Lösungsmittel, wobei das Anti-Lösungsmittel Wasser oder ein Alkohol ist,
c) Abtrennung des Lösungsmittels und Anti-Lösungsmittels von dem präzipitierten Polyester, und
d) enzymatische Hydrolyse des präzipitierten Polyesters.

2. Verfahren nach Anspruch 1, **dadurch gekennzeichnet, dass** der Polyestermit kristallinen Anteilen Polyethylenterephthalat (PET) ist.

3. Verfahren nach Anspruch 1 oder 2, **dadurch gekennzeichnet, dass** das Lösungsmittel ein halogeniertes organisches Lösungsmittel ist.

4. Verfahren nach einem der Ansprüche 1 bis 3, **dadurch gekennzeichnet, dass** das Lösungsmittel ausgewählt ist aus der Gruppe umfassend Hexafluoro-2-propanol (HFIP), Cholin-haltigen ionischen Flüssigkeiten, o-Chlorophenol, o-Cresol, Dichlormethan, Trifluoressigsäure (TFA) oder Mischungen dieser.

5. Verfahren nach einem der Ansprüche 1 bis 4, **dadurch gekennzeichnet, dass** das Lösungsmittel Hexafluoro-2-propanol (HFIP) oder Trifluoressigsäure (TFA) ist.

6. Verfahren nach einem der Ansprüche 1 bis 5, **dadurch gekennzeichnet, dass** das Lösen des Polyesters in Schritt a) mit einer Konzentration im Bereich von 0,05 g/ml bis 0,5 g/ml Polyester im Lösungsmittel erfolgt.

7. Verfahren nach einem der Ansprüche 1 bis 6, **dadurch gekennzeichnet, dass** das Anti-Lösungsmittel ausgewählt ist aus Wasser, Isopropanol, Ethanol oder Ethylenglykol.

8. Verfahren nach einem der Ansprüche1 bis 7, **dadurch gekennzeichnet, dass** das Verhältnis Lösungs- und Anti-Lösungsmittel im Bereich von 1:1 bis 1:100 liegt.

9. Verfahren nach einem der Ansprüche 1 bis 8, umfassend weiterhin eine Zerkleinerung des Polyesters, bevorzugt vor Schritt a), und/oder eine Trocknung des präzipitierten Polyesters, bevorzugt nach Schritt c).

10. Verfahren nach einem der Ansprüche 1 bis 9, **dadurch gekennzeichnet, dass** die enzymatische Hydrolyse in Schritt d) durch Kontaktierung des präzipitierten Polyesters mit einer Polyesterhydrolase erfolgt.

11. Verfahren nach Anspruch 10, **dadurch gekennzeichnet, dass** die Polyesterhydrolase ausgewählt ist aus Cutinasen, Proteasen, Lipasen, Carboxylesterasen und Esterasen.

12. Verfahren nach einem der Ansprüche 1 bis 11, **dadurch gekennzeichnet, dass** die enzymatische Hydrolyse bei einer Temperatur im Bereich von 5°C bis 90°C erfolgt.
